# EUROPEAN PATENT SPECIFICATION

(11) **EP 3 975 715 B1**
(45) Date of publication and mention of the grant of the patent: **10.09.2025**
(21) Application number: 20729676.5
(22) Date of filing: 26.05.2020
(51) Int. Cl.: A01M 7/00

(54) **AGRICULTURAL SPRAYER CONTROL SYSTEM**
STEUERSYSTEMFÜR LANDWIRTSCHAFTLICHEN SPRÜHER
SYSTÈME DE COMMANDE DE PULVÉRISATEUR AGRICOLE

(30) Priority: 30.05.2019 GB 201907671
(43) Date of publication of application: 06.04.2022
(73) Proprietor: AGCO International GmbH, 8212 Neuhausen am Rheinfall (CH)
(72) Inventor: SCHMITZ, Lars, 5971 NG Grubbenvorst (NL); STOLS, Hans, 5971 NG Grubbenvorst (NL)
(74) Representative: AGCO Intellectual Property Department
(86) International application number: PCT/EP2020/064588
(87) International publication number: WO 2020/239773

(56) References cited:
- EP-A1- 2 111 094
- EP-A1- 2 995 383
- EP-B1- 2 111 094
- JP-A- 2002 125 567
- US-A1- 2016 015 020
- US-A1- 2017 251 656
- US-A1- 2017 348 718

## Description

### Cross-reference to Related Application

The present application claims the benefit of and priority from United Kingdom Application No. 1907664.5, filed May 30, 2019, the entire disclosure of which is hereby incorporated by reference.

### Field of Invention

The invention relates to the control of agricultural sprayer machines used to apply pesticides and other inputs to crop fields and typically comprising a fluid delivery network with a pump in hydraulic communication with a plurality of spaced-apart nozzles.

### Background

Agricultural sprayers are used by farmers and contractors to apply pesticides and other nutrient-containing solutions to crop fields. Sprayers can be mounted to, or towed by, a tractor or other suitable vehicle or may be self-propelled with an integrated means of propulsion and a driver's cab. The sprayer machine typically includes a storage tank for the liquid to be applied, the tank being filled as required by the operator. Alternatively, in systems which offer lower ground pressure, the sprayer machine may be semi-permanently connected by a pipe to a local (field-based) bowser wherein the applied liquid is supplied via a pipe from the bowser to the sprayer continuously as the latter is repeatedly moved across the crop field.

For example, EP 2 111 094 A1 discloses an apparatus configured to apply material to a crop in a field. A sensor is configured to obtain crop data. The apparatus also includes a delivery vehicle controller configured to automatically control movement of the delivery vehicle and an agriculture controller configured to determine the needs of the crop based on the crop data. An applicator controller in communication with the agriculture controller and a material applicator (e.g., a spreader valve and/or a sprayer valve) is configured to control the material applicator.

JP 2002 125567 A is related to a spray work machine. Instead of manually operating spray cock an operation for controlling the amount of a sprayed chemical is made to be carried out interlocking with the opening or closing of a spray cock.

US 2017/348718 A1 is related to a nozzle control system and method for the application of products to crops or a field. An agricultural sprayer includes a reservoir tank, one or more sprayer booms, including one or more nozzles, one or more electronic control units (ECU), and a master node (e.g., a microprocessor based system). The nozzles are positioned along the sprayer boom to deliver the agricultural product to a crop or an agricultural field. The master node operates in conjunction with the one or more ECU to control delivery of the agricultural product from the reservoir tank, to the sprayer boom and the associated nozzles for delivery to the agricultural field or crop.

US 2017/251656 A1 discloses a spraying system which is configured to apply fluid to a target with a nozzle assembly. It includes a control system configured to control the nozzle assembly, based on information from a user interface communicatively coupled to the control system. The information includes target population information, application rate information, pressure set point information, and target speed information corresponding to a target travel speed of the spraying system.

US 2016/015020 A1 discloses a spray system configured to dispense a product as the system is moved at a travel speed. A plurality of nozzle assemblies is configured to dispense product such that an upstream nozzle pressure is established within a conduit. A pressure controller is configured to receive speed information indicative of the travel speed of the system and control at least one operating parameter of at least one of the plurality of nozzle assemblies based at least in part on the speed information received to maintain a substantially constant upstream nozzle pressure.

The liquid is applied to the field by a number of discharge devices which are mounted in a spaced relationship along the length of a boom which, itself, is mounted to the sprayer vehicle. The discharge devices are each connected to the storage tank by a fluid delivery network comprising various pipes, valves, pumps and other plumbing and comprise at least one nozzle. The liquid is typically atomised by the nozzle and applied to the crop in a jet of mist for example.

The fluid delivery network operates at a variable system pressure to create an expulsion force for the liquid. The system pressure is generally proportional to the flow rate of the liquid through the nozzles with a quadratic relationship, and can be adjusted in dependence on a groundspeed to deliver a target application rate to the crop field, the higher the system pressure the greater the flow rate.

The system pressure is known to have an effect on the droplet size of the applied liquid. A lower system pressure produces a larger droplet size whereas a higher system pressure produces a smaller droplet size or finer mist. Therefore, for a given nozzle, the physical properties of the applied liquid can change with groundspeed as the system pressure is adjusted 'on-the-fly' to deliver the target application rate.

The physical properties of the applied liquid can affect the efficacy of the pesticide and/or the drift characteristics. To explain, a finer mist (produced at higher system pressures) typically delivers better surface coverage of the crop or ground and thus greater pesticide efficacy. However, a finer mist is also more vulnerable to drift caused by ambient wind conditions for example, whereas a larger droplet size (produced at lower system pressures) reduces the risk of drift.

In an effort to reducing drift one approach has seen the development of air induction nozzles which utilise the venture effect to introduce air into the spray droplets as the liquid is forced through the nozzle. The air induction makes the droplets less susceptible to drift.

Drift reducing technology has also led to the introduction of drift reduction classes for nozzles in which marketed nozzles are certified as meeting drift reduction classes, for example 50%, 75%, 90% drift reducing, when operated within specified pressure ranges. For example, a nozzle may be certified as delivering 75% drift reduction when operated between 1.5 bar and 3.0 bar. In operation therefore, in order to meet 75% drift reduction the operator must ensure that the pressure does not exceed 3.0 bar.

It is known to provide multi-nozzle discharge devices which comprise two or more nozzles that can be activated independently. The chosen nozzles typically have different flow rate characteristics. Each nozzle, or combination thereof, can be activated to deliver different droplet sizes for a given application rate. Or, in other words, each nozzle combination is capable of delivering different flow rates at a given enables the controller to automatically select the drift reduction class and retrieve the stored operating parameters associated therewith.

According to another aspect of the invention there is provided a method of controlling an agricultural spraying machine having a fluid delivery network with a pump in hydraulic communication with a plurality of spaced-apart nozzles, the method comprising receiving and storing a respective operating parameter for each one of a plurality of drift reduction classes, selecting one of said plurality of drift reduction classes, and controlling one of the pump, a vehicle speed, a nozzle selection and a display based upon the operating parameter associated with the selected drift reduction class.

In accordance with yet another aspect of the invention there is provided a controller for an agricultural sprayer machine configured to:
receive an application rate setpoint, a pressure setpoint, a nozzle reference flow and a nozzle reference pressure;
calculate a speed setpoint based upon the application rate setpoint, the nozzle reference flow, the nozzle reference pressure and the pressure setpoint; and,
control at least one of a forward speed and a display based upon the speed setpoint.

By generating speed setpoints based upon the properties of the available nozzles and any operating limitations placed on those nozzles, the spraying machine can be simply controlled based on forward speed. The control of forward speed may be simply through a display of the speed setpoint to a driver or as a direct electronic command to a forward speed controller in a TIM (Tractor-Implement-Management) system. Advantageously, the speed can be set at an optimal speed with assurance to the operator that all operating restrictions (e.g. pressure limits) are met.

The controller is preferably configured to adapt the speed setpoint in response to a change in the application rate setpoint or pressure setpoint.

In a preferred embodiment the controller is further configured to receive a pressure range, and to generate an adapted pressure setpoint from the pressure setpoint when the pressure setpoint resides outside of the pressure range, wherein the adapted pressure setpoint equates to one of an upper limit and a lower limit of the pressure range, and wherein the speed setpoint is based upon the adapted pressure setpoint. As such, the pressure setpoint is 'trimmed' if it resides outside a permitted pressure range which may be set, for example, by operating parameters of a selected drift reduction class.

The controller is preferably embodied in an agricultural sprayer machine having a fluid delivery network in hydraulic communication with a plurality of spaced-apart nozzles. The sprayer machine may be a combination of a trailed sprayer and tractor or a self-propelled sprayer by way of example.

A forward speed of the machine may be limited at or below the speed setpoint.

A user interface device may be provided for receiving speed commands from a driver, wherein the controller is configured to control the forward speed in response to received speed commands. The user interface device may be a driver handle or a touchscreen display by way of example only.

In one embodiment the controller is further configured to generate a driver alert in response to receiving a speed command that corresponds to a speed that exceeds the speed setpoint or a speed range for a currently active nozzle set.

Although applicable to sprayer machines which comprise a single basic set of spaced nozzles, the invention lends itself particularly well to multi-nozzle arrangements. In a preferred embodiment the spraying machine further comprises a plurality of nozzle groups disposed in a mutually spaced relationship and connected to the fluid delivery network. Each nozzle group comprises a plurality of nozzles that can be independently activated, wherein, when activated, a nozzle from said plurality of nozzles is put into hydraulic communication with the fluid delivery network.

A nozzle set comprises at least one nozzle from each nozzle group, and the controller is preferably configured to receive for each of a plurality of nozzle sets a respective upper pressure limit, a nozzle reference flow and a nozzle reference pressure, and calculate a speed setpoint for each one of said plurality of nozzle sets.

The invention lends itself particularly well to a TIM system that is operable between a sprayer and a tractor wherein a controller located on the sprayer generates speed setpoints which are communicated to the tractor. A user interface device may be provided for receiving speed commands from a driver, wherein the controller is configured to control the forward speed in response to received speed commands wherein a speed command sequentially steps the speed up or down from a first one of the speed setpoints to a second one of the speed setpoints.

According to yet another aspect of the invention there is provided a method of controlling an agricultural spraying machine comprising receiving an application rate setpoint, a pressure setpoint, a nozzle reference flow and a nozzle reference pressure, calculating a speed setpoint based upon the application rate setpoint, the nozzle reference flow, the nozzle reference pressure and the pressure setpoint, and, controlling at least one of a forward speed and a display based upon the speed setpoint.

The method may further comprise the steps of
receiving for each of a plurality of nozzle sets an upper pressure limit, a lower pressure limit, a nozzle reference flow and a nozzle reference pressure;
calculating a speed range for each nozzle set, wherein each speed range comprises a lower speed limit and an upper speed limit;
sensing a forward speed of the spraying machine; and,
selecting one of said nozzle sets based upon the forward speed and the speed ranges.

The method may be executed by a smart device.

### Brief Description of the Drawings

Further advantages of the invention will become apparent from reading the following description of specific embodiments in which:
Fig. 1 is a plan view of a tractor and pull-type sprayer combination suitable for implementation of aspects of the invention;
Fig. 2 is a diagrammatic view of part of the spraying machine in accordance with an embodiment of the invention showing some nozzles connected to the fluid delivery network;
Fig. 3 is a block diagram of part of a spraying machine in accordance with an embodiment of the invention;

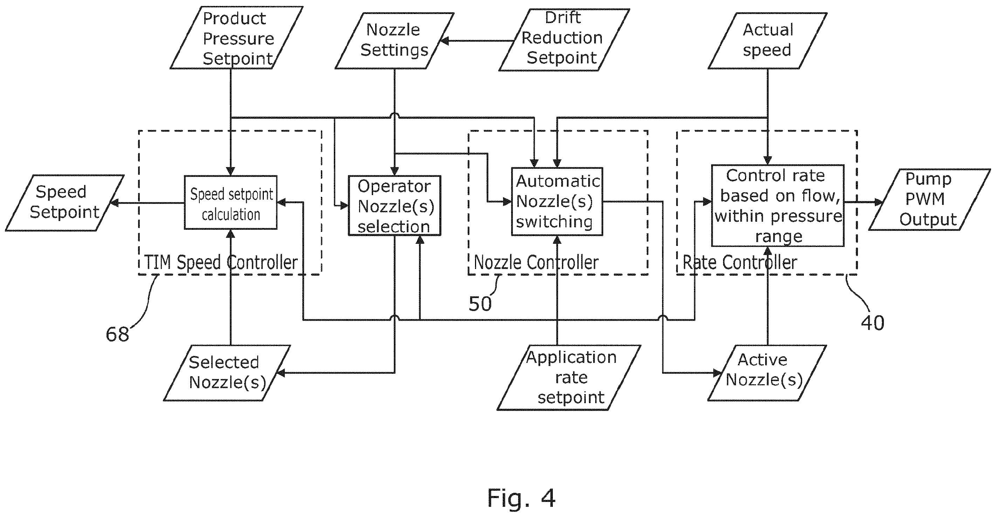

Fig. 4 is functional flow diagram showing various sub-systems of a spraying machine in accordance with the invention;
Fig. 5 is a plot of system pressure against forward speed for a fixed target application rate for three different nozzle combinations (nozzle 21, nozzle 22, and nozzle 21+22);
Fig. 6 is the same plot of Fig. 5 but overlaid with nozzle selection and speed setpoints for 50%, 75% and 90% drift reduction conditions;
Figs. 7 to 9 each show a screen grab from the operator console of the spray machine of Fig. 4; and,
Fig. 10 is a flow chart illustrating a method of operating a sprayer machine in accordance with an embodiment of the invention.

### Detailed Description of Specific Embodiments

While the disclosure will be described in connection with these drawings there is no intent to limit to the embodiment or embodiments disclosed herein. Although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the scope of the disclosure as defined by the appended claims. Further, it should be appreciated in the context of the present disclosure that the claims are not necessarily limited to the particular embodiments set out in the description.

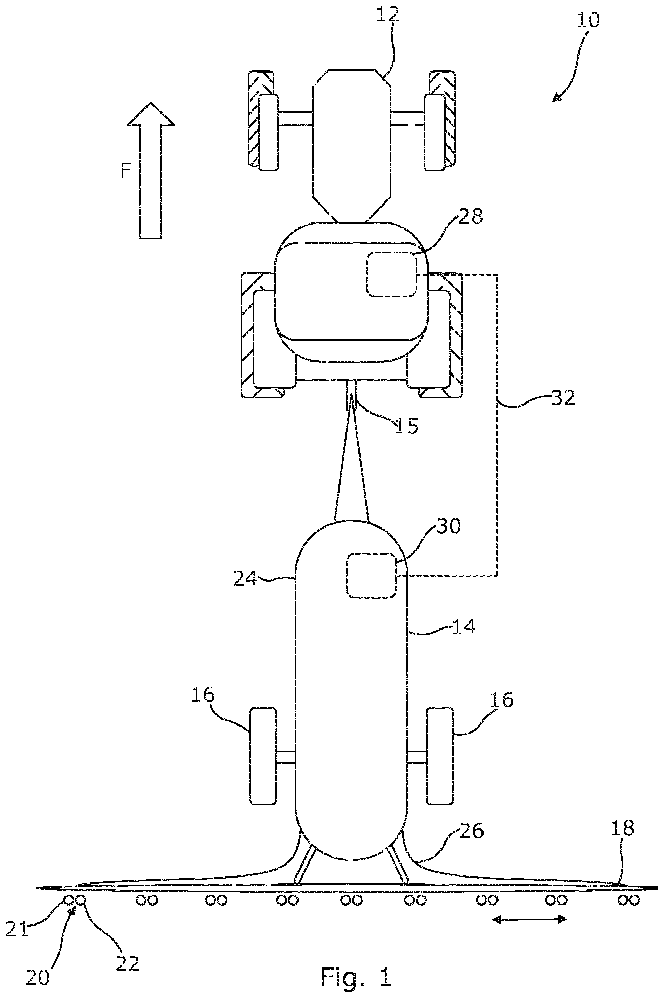

With reference to Fig. 1 an agricultural spraying machine 10 is illustrated in the form of an agricultural tractor 12 and trailed sprayer 14 combination wherein the sprayer 14 is attached to the tractor 12 at a hitch 15 in a known manner. The tractor 12 and sprayer 14 are driven in a generally forward direction (arrow F) through crop fields to apply pesticides or other nutrient-containing solutions to a growing plant or directly on to the ground. The sprayer 14 is of a generally known pull-type construction and includes ground-engaging wheels 16 and a spray boom 18 which extends transversely with respect to the forward direction F.

It will be appreciated that although a tractor and trailed sprayer combination is illustrated in Fig. 1, aspects of the invention can be implemented in other types of agricultural sprayer machines including mounted sprayers and self-propelled sprayers.

Although not shown in Fig. 1, the spray boom 18 may comprise a number of boom sections which are foldable into transport position as is well known in the art. It should be appreciated that the spray boom 18 shown in Fig. 1 is not necessarily to scale and is shown in schematic form only. For example, the spray boom 18 may extend up to widths of around 48 metres.

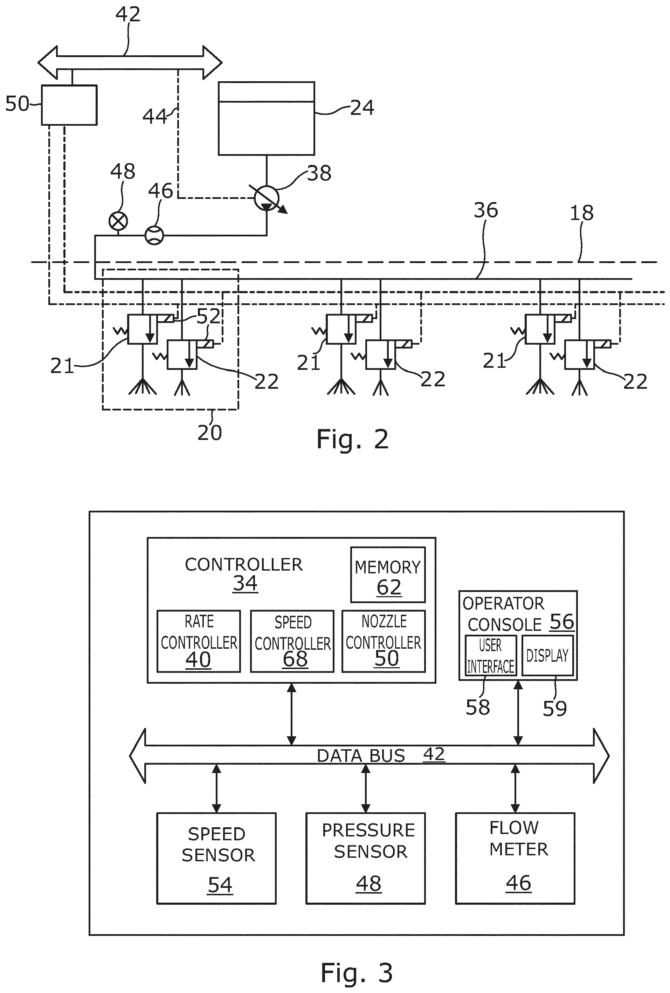

With reference also to Fig. 2, mounted to the boom 18 are a plurality of nozzle groups 20 disposed in a mutually-spaced relationship at a distance 'z'. Each nozzle group 20 includes two individually-controllable nozzles 21,22, wherein the nozzles 21,22 for each group have the same flow characteristics. In other words, each nozzle group has a first nozzle 21 of a first type and a second nozzle of a second type which is typically different to the first type. The details and control of the nozzles 21,22 will be described in more detail below.

Turning back to the sprayer 14, a chemical tank 24 is provided on a frame for the storage of the chemical solution to be applied. A fluid delivery network is represented schematically in Fig. 1 at 26 and serves to hydraulically connect the chemical tank 24 with the nozzles 21,22. Further details of the fluid delivery network 26 will also described in more detail below.

In the illustrated embodiment a first electronic control unit (ECU) 28 is located on the tractor 12 and a second ECU 30 is located on the sprayer 14. The ECUs 28,30 are connected by wired or wireless connection 32 which allows the controllers 28,30 to communicate according to the ISO standard 11783 'ISOBUS'. ISOBUS facilitates a mutual communication between implements and tractors regardless of the OEM and, in this case, enables data collected and generated by sprayer ECU 30 to be communicated to tractor ECU 28.

Although two ECUs 28,30 are disclosed in the illustrated embodiment, it should be understood that the control logic described may be carried out on one or both of the tractor 12 and sprayer 14. For example, the control components described may be located on the sprayer 14 alone. It should be understood, therefore, that references to controller 34 hereinafter are in relation to ECU 28,30 wherein the components and functionality of controller 34 may be located in one of the tractor ECU 28 and sprayer ECU 30 or distributed across both.

The controller 34 may be embodied as a custom made or commercially available processor, an auxiliary processor amongst several processors (although simplicity in component numbers is desirable for AAM), a semi-conductor microprocessor (in the form of a microchip), a macro processor, one or more application specific integrated circuits (ASICS), a plurality of suitably configured digital logic gates, and/or other well-known electrical configurations comprising discrete elements both individually and in various combinations to co-ordinate the overall operation of the controller 34.

The controller 34 includes a memory 62 which may include onboard storage devices represented by read-only (ROM) and random-access (RAM) devices (not shown).

When certain embodiments of the control systems are implemented at least in part as software (including firmware), it should be noted that alternatively or in addition to ROM, the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the control systems are implemented at least in part as hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Turning to Fig. 2, three nozzle groups 20 each having two nozzles 21,22 are shown. Although not shown in detail, each nozzle 21,22 is mounted upon the rigid structure of boom 18. It should also be appreciated that a typical sprayer will include perhaps several tens of nozzle groups 20 and that only three are illustrated in Figure 2 for sake of explanation. Furthermore, it is envisaged that the nozzle groups 20 may comprise more than two nozzles.

The fluid delivery network 26 includes a fluid supply line 36 which hydraulically connects a variable flow pump 38 to the nozzles 21,22 located on boom 18. The pump 38 serves to pressurise the fluid supply line 36 by pumping chemical solution from tank 24. Pump 38 may be one of various suitable types including roller vein pumps, centrifugal pumps, diaphragm pumps and axial-piston pumps by way of example. The output of pump 38 is controlled by rate controller 40 which is part of controller 34 and connected to the pump 38 via databus 42 and electronic connection 44.

Although a databus 42 is shown and described, it is envisaged that the various electronic components can be connected directly without the use of a databus without deviating from the scope of the invention.

The volumetric flow through fluid delivery line 36 is measured by flowmeter 46. The pressure of fluid delivery line 36 is measured by a pressure sensor 48. Both the flowmeter 46 and pressure sensor 48 are in electronic communication with controller 34 via databus 42.

It will be appreciated that the fluid control circuit (or part thereof) shown in Fig. 2 is highly simplified and various other components which would typically be included such as a clean water rinse tank, a chemical inductor, return lines, etc., have been excluded for the sake of simple explanation of the inventive aspects.

Each nozzle 21,22 is plumbed in to the fluid delivery line 36 with a respective connection which comprises a respective electrical solenoid valve 52 for selectively activating the nozzle 21,22. Each solenoid valve 52 is electrically connected to nozzle controller 50 which is in communication with databus 42and is embodied in controller 34. Nozzle controller 50 serves to selectively activate and deactivate the independently controllable nozzles 21,22. In an alternative embodiment the solenoids are replaced with electrical motors.

The output of each nozzle 21,22 is proportional in a quadratic relationship to the pressure p in fluid delivery line 36 wherein a greater pressure leads to a higher output flow and a lower pressure leads to a lower output flow.

For the sake of explanation the illustrated embodiment has nozzles 21 having a first flow characteristic and nozzles 22 having a second flow characteristic that is different to the first. It should be understood that the term "flow characteristic" relates generally to the output flow rate of a given nozzle at a reference pressure. It is known in the art that nozzles having different flow characteristics are available so as to meet a desired application rate within a desired pressure range for example. Such nozzle flow characteristics may be identified by a known colour coding system.

Although shown schematically in Figs. 1 and 2, it should be appreciated that nozzle groups may be presented in many different ways. For example, the individual nozzles in each group may be arranged in a compact arrangement and having respective connections to the fluid supply line as illustrated. Alternatively, an integrated spray body having a plurality of nozzles may be connected to the fluid supply line by a single connection, wherein the nozzles are selected by valve means and/or by rotating the valve body.

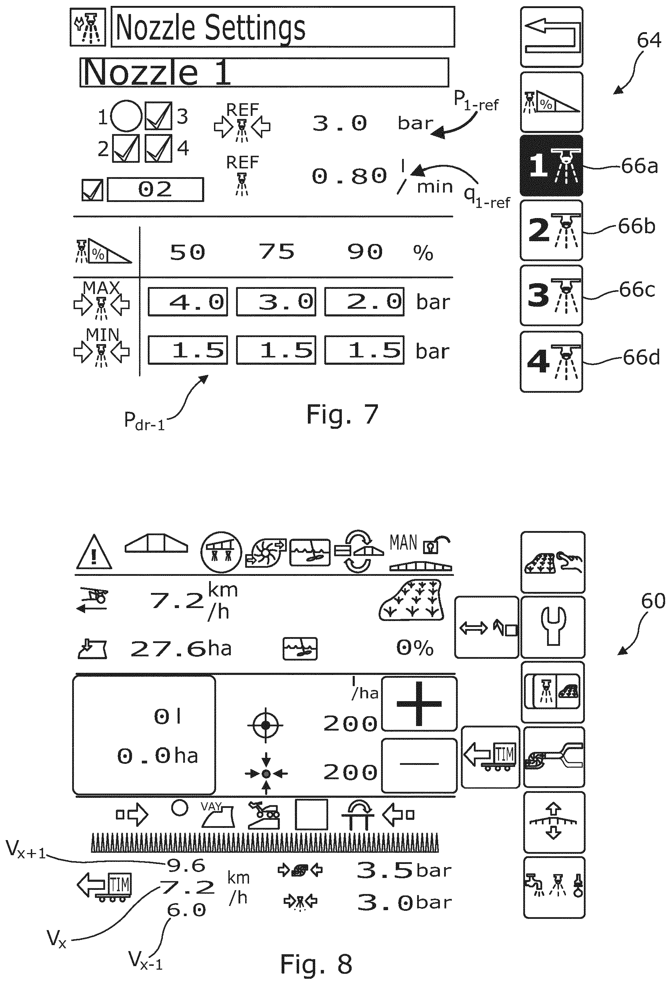

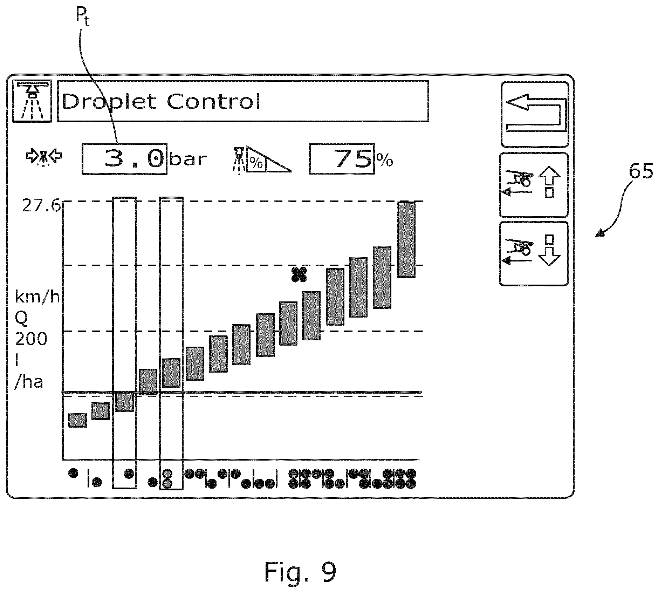

References to 'nozzle sets' hereinafter is intended to refer to one or more nozzles from each of the nozzle groups 20 to include spaced nozzles, or combination of nozzles, of the same type or having the same flow characteristics along the boom 18. A nozzle set may include a combination of different nozzles (21, 22, or 21+22) from each nozzle group 20 or only single nozzles (21,22) from each nozzle group 20. The reference number 21' will refer to a nozzle set comprising all nozzles 21. The reference number 22' will refer to a nozzle set comprising all nozzles 22. The reference number 21+22' will refer to a nozzle set comprising a combination of all nozzles 21 and all nozzles 22. The embodiment illustrated in Figs. 7-9 has nozzle groups with four nozzles each resulting in fifteen different nozzle sets (see Fig. 9) which includes the different combinations of nozzles within the group.

With reference to Fig. 3 the sprayer machine 10 further comprises a speed sensor 54 which senses the forward speed of the machine 10 and communicates this to controller 34 via databus 42. The speed sensor 54 may be a standalone sensor attached to the sprayer 14 or tractor 12 (radar sensor) or may take a ground speed signal from an on-board satellite positioning system.

The tractor 12 further comprises an operator console 56 which includes a user interface 58 in the form of a touch screen or a keyboard for example, and a display 59. If embodied in a self-propelled sprayer it should be understood that the user interface and display is located in the cab of such. In another embodiment the user interface and display are embodied in a smart device which may be in wireless communication (by Bluetooth for example) with the controller 34 and located in the operators cab.

Turning to aspects of the control functionality of controller 34 and starting with rate control, the rate controller 40 serves to control the output of pump 38 to maintain a target flow q to meet the application rate setpoint Q. Calculation of the pump output requires the following values:
- Application rate setpoint, Q
- Actual forward speed, vₐ
- Actual product flow, qₐ
- Operating width, w
- Nozzle reference pressure of active nozzle set, p_{x-ref}
- Nozzle reference flow of active nozzle set, q_{x-ref}
- Product pressure setpoint, pₜ

Pump control signals generated by rate controller 40 may be pulse width modulated.

The application rate setpoint Q is entered by the operator and stored by controller 34. Figs. 7-9 each show a screen grab from respective viewing modes of the operator console 56. Fig. 7 shows a Nozzle Settings screen 64, Fig. 8 shows a Spraying Control Main screen 60, and Fig. 9 shows a Droplet Control screen 65.

In the embodiment corresponding to the screen grabs shown it should be appreciated that the example includes an arrangement with nozzle groups having four individual nozzles (labelled 'Nozzle 1', etc.) rather than the two nozzles shown in Figs. 1 and 2. The Spraying Control main screen 60 allows the operator to set the application rate setpoint Q. The arrangement shown includes buttons 60a,60b for entering the application rate set point Q which, in this example, is shown as being set at 200 I/ha.

The actual forward speed vₐ is generated by speed sensor 54 or equivalent device. The actual product flow qₐ is generated by flow meter 46. The operating width w (corresponding to the active nozzles) and nozzle spacing z is stored in memory 62.

In the Nozzle Settings screen 64 the operator can enter a nozzle reference pressure p_{x-ref} and nozzle reference flow q_{x-ref} for each nozzle available in the group. In the example shown 'Nozzle 1' is selected and a reference pressure p_{1-ref} of 3.0 bar is entered and a reference flow (at 3 bar) q_{1-ref} is entered as 0.8 I/min. The reference pressure p_{1-ref} and reference flow q_{1-ref} enable the controller 34 to determine a predicted flow rate at a given pressure when Nozzle 1 is selected. The same information is entered for the other available nozzles in the group.

The Droplet Control screen 65 allows an operator to enter the product pressure set point pₜ which represents a target pressure in the fluid delivery line 36.

Using these constants and variables, the rate controller 40 controls the pump 38 to deliver the correct flow to apply the chemical solution at the target rate Q. It will be appreciated that as the variables change then this affects the control of pump 38. For example, if the target rate setpoint Q is increased then the pump output (and system pressure p) will be increased in response.

### Drift Reduction Settings

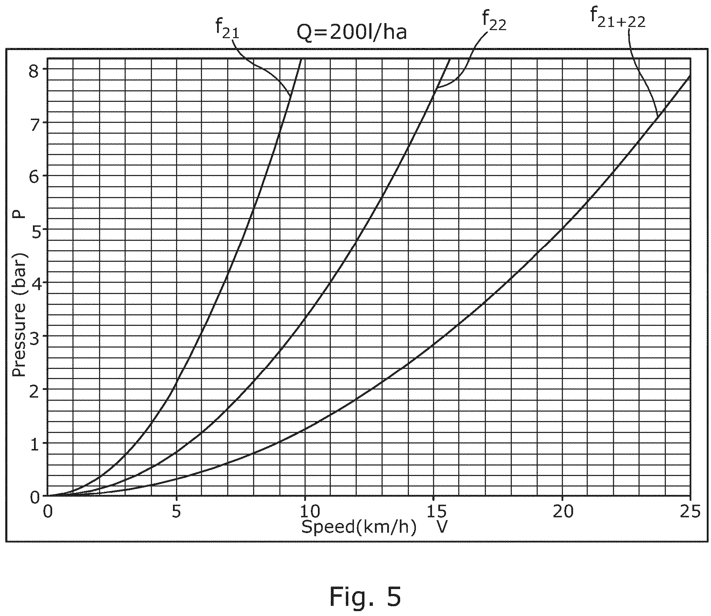

As forward speed v is increased the required rate q increases and so the output of pump 38 and the operating pressure p is increased. The relationship between system pressure p and forward speed v for different nozzle sets at a constant target rate Q is shown in Fig. 5. A first plot f₂₁ corresponds to the first nozzle set 21', a second plot corresponds to the second nozzle set 22', and a third plot corresponds to the third nozzle set 21+22'.

As mentioned in the background section above, drift reducing technology has led to the introduction of drift reduction classes for nozzles in which marketed nozzles are certified as meeting drift reduction classes, for example 50%-, 75%-, 90%-drift reducing, when operated within specified pressure ranges. by way of example, and with reference to the nozzles 21,22, example upper pressure limits may be assigned as per Table 1 below.

**Table 1**

| **Nozzle** | **Upper pressure limit per Drift Reduction Class (bar)** | | |
|---|---|---|---|
| | **50%** | **75%** | **90%** |
| Nozzle 21 | 7.0 | 4.0 | 2.5 |
| Nozzle 22 | 8.0 | 6.0 | 3.0 |

A minimum operating pressure may also be assigned to ensure that the output spray is of a sufficient quality. In one embodiment the entering of a minimum operating pressure per drift reduction class per nozzle is made mandatory for the operator.

In the illustrated embodiment the controller 34 receives and stores for each nozzle 21,22 an upper pressure limit for each of three drift reduction classes as shown above. Also, a lower pressure limit is entered for each of three drift reduction classes for each nozzle.

The upper pressure limits for each nozzle operating under each drift reduction class can be entered into the controller 34 by the user using the operator console 56 and Nozzle Settings screen 64. Alternatively, the controller 34 may store a lookup table of different nozzles and their corresponding operating parameters for different drift reduction classes, and retrieve the operating parameters based on an identification of the nozzle type.

The Nozzle Settings screen 64 allows the operator to enter the upper and lower pressure limits p_{dr-1} for Nozzle 1. In this example, the operator has entered an upper pressure limit of 3.0 bar for the 75% drift reduction class, and a lower pressure limit of 1.5 bar. The operator can switch from nozzle to nozzle using buttons 66a to 66d shown on the right-hand side of Fig. 7. For each nozzle set the operator can enter upper and lower pressure limits for each drift reduction class.

In operation, the controller 34 or the operator selects one of the drift reduction classes c₅₀, c₇₅, c₉₀. The controller 34 operates the sprayer 14 to indirectly maintain the operating pressure p between the lower and upper pressure limits of the selected drift reduction class by controlling speed, wherein the speed is controlled according to speed setpoints that are determined based at least in part on the drift reduction pressure limits p_{dr}. See below for a more detailed explanation of speed setpoints.

In one embodiment, the controller 34 is configured to select one of the drift reduction classes based upon a location identifier which may be provided by a global position system in conjunction with an application map having a plurality of regions, each region being associated with a specific drift reduction class. In other words, the drift reduction class selected by the controller 34 is determined by the position of the machine 10 in relation to the application map.

In an alternative, more primitive, embodiment, the pump 38 is controlled to maintain the pressure p below the upper pressure limit of the selected or active drift reduction class. However in a preferred embodiment the drift reduction parameters p_{dr} are embedded in the nozzle settings to calculate speed setpoints and speed ranges which will be described in more detail below.

### Speed Setpoints

Controller 34 embodies a speed controller 68 which is operable to generate speed setpoints vₓ which serve to command a forward speed of the sprayer machine 10 or to indicate an optimum forward speed v to the operator to deliver the target rate Q without exceeding the operating parameters of a selected drift reduction class c. Calculation of each speed setpoint associated with a given nozzle set requires the following values:
- Application rate setpoint, Q
- Product pressure setpoint, pₜ
- Operating width, w
- Nozzle spacing, z
- Nozzle reference pressure of active nozzle set, p_{x-ref}
- Nozzle reference flow of active nozzle set, q_{x-ref}
- Pressure range (max and min) of active nozzle set, p_{dr-x}

The speed setpoints vₓ are calculated for each nozzle set and each drift reduction class. The listed variables and constants are received by the controller 34 through the same means as described above in relation to the flow rate control. The upper and lower pressure limits p_{dr-x} associated with each drift reduction class are entered through the operator console 56 as also described above.

Although the speed setpoints vₓ may serve only as displayed indications of an optimum driving speed v for the selected nozzle set, the invention lends itself particularly well to TIM systems wherein the speed setpoints vₓ are communicated by ISOBUS link 32 to the tractor controller 28 and serve as speed commands that are dependent upon the selected nozzle set.

With reference to Fig. 8, the current speed set point vₓ may be displayed on the Spraying Control Main screen 60 together with the next lowest and next highest speed setpoint vₓ₋₁, vₓ₊₁ which indicates to the operator the next available speed setpoints at the selected drift reduction class. In this TIM-based system the operator needs simply to request a step up or step down in speed v to change between speed setpoints vₓ which ensures the application rate Q and drift reduction class requirements can be met with the available nozzles.

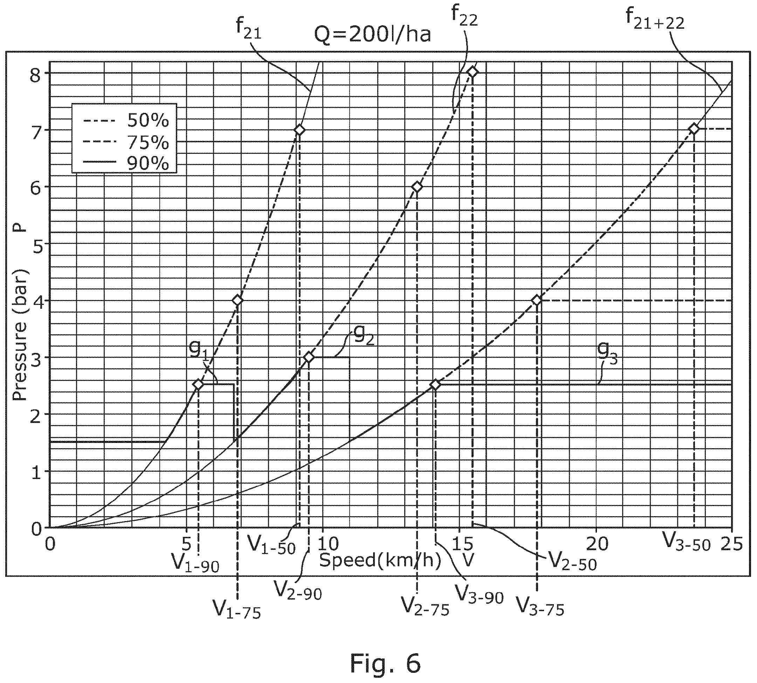

Returning to the embodiment of Fig. 2 having first nozzle set 21', second nozzle set 22' and third nozzle set 21+22', the three corresponding pressure-speed plots of Fig. 5 are overlaid with speed setpoints vₓ in Fig. 6. As can be seen from Fig. 6, the speed setpoints correspond to the upper pressure limits for the selected nozzle set and drift reduction class as per Table 1 above. Advantageously, this causes the sprayer machine 10 to operate at an optimum forward speed v whilst meeting the drift reduction parameters p_{dr} and target rate Q.

The speed setpoints vₓ depend inter alia upon the upon the product pressure setpoint pₜ and the pressure range for the selected nozzle and the selected drift reduction class. For a selected nozzle set nₓ, a selected drift reduction class cₓ, and application rate setpoint Q, the speed setpoint vₓ corresponds to the product pressure setpoint pₜ unless the product pressure setpoint pₜ falls outside of the pressure range p_{dr-range} for the selected drift reduction class and nozzle set. If the product pressure setpoint pₜ does falls outside of the pressure range p_{dr-range} then the speed setpoint vₓ corresponds to the upper or lower pressure limits for the selected drift reduction class cₓ and nozzle set nₓ. In other words, the product pressure setpoint pₜ is trimmed if it falls outside of the pressure range permitted by the selected drift reduction class and nozzle set.

Returning to Fig. 6, starting with a drift reduction class of 50% (c₅₀) it can be seen from the upper pressure limit p_{dr} for nozzle set 21', is set at 7.0 bar resulting in a speed setpoint v₁₋₅₀ of 9.2 km/h. The corresponding upper pressure limit for nozzle set 22' is set at 8.0 bar which gives a speed setpoint v₂₋₅₀ of 15.5 km/h. The corresponding upper pressure limit for the third nozzle set 21+22' is dictated by the nozzle with the lowest upper pressure limit which is nozzle set 21'. As such the corresponding upper pressure limit for the third nozzle set 21+22' is set at 7.0 bar resulting in a speed setpoint v₃₋₅₀ of 23.6 km/h.

For the more stringent drift reduction classes, the upper pressure limits for the respective nozzle sets are reduced due to the requirement for a coarser spray quality. At 75% drift reduction respective speed setpoints v₁₋₇₅,v₂₋₇₅,v₃₋₇₅ of 5.9 km/h, 13.4 km/h and 17.8 km/h are calculated for the nozzle sets 21', 22', 21+22'.

For both the 50% and 75% drift reduction classes, a continuous speed range can be achieved between 4.2 km/h to 17.8 km/h wherein it is possible to apply pesticide at the target rate Q (200 I/ha in this example) and whilst meeting the drift reduction requirements. However, speed gaps g₁,g₂ represented by the horizontal lines in Fig. 6 result from no nozzle set being available to deliver the target rate Q at those speeds under the requirements for 90% drift reduction. Over these speed gaps g₁,g₂ the pesticide is under applied.

It should be appreciated that the speed setpoints may be adapted in response to a change in the input parameters. For example, if the available nozzle sets are changed then this may accompany a change in upper pressure limits associated with the drift reduction classes. In turn, the speed setpoints would be adapted accordingly.

The generation and use of speed setpoints vₓ in accordance with an aspect of the invention facilitates simple control of the sprayer forward speed v and avoids a situation of under applying the pesticide and/or breaching the thresholds associated with drift reduction classes. When implemented in conjunction with TIM functionality the speed setpoints vₓ serve as discreet selectable speeds that deliver an optimum spray application for the respective nozzle sets available. Although automatic selection of nozzle set may be based upon the measured actual speed vₐ (see below) the selection of forward speed v is commanded by an operator, and the forward speed (at least under a TIM arrangement) may be selected from discrete values which correspond to an optimum speed for the nozzle sets available.

Alternatively, the speed setpoints vₓ serve as upper speed limits for selected nozzle sets, wherein the speed setpoint is stepped up or down in response to a change in selected nozzle set upon command of an operator.

In yet another alternative embodiment the speed set points vₓ are displayed as a guide to the driver. In this case the controller 34 is configured to generate a driver alert in the form of an audible alert and/or a visual alert in response to receiving a speed command from the driver that corresponds to a speed that exceeds the displayed speed setpoint. Moreover, a driver alert may be provided in the case of an operator commanding a switch in nozzle set wherein the current speed cannot deliver the application rate Q at the required drift reduction class cₓ.

Although the generation of speed set points vₓ has been described in relation to a sprayer machine having multiple nozzle sets, it is envisaged that a more primitive arrangement having only a single nozzle set may also benefit from the generation of speed setpoints to either command a speed or indicate an optimal driving speed for the various drift reduction classes cₓ stored on the controller.

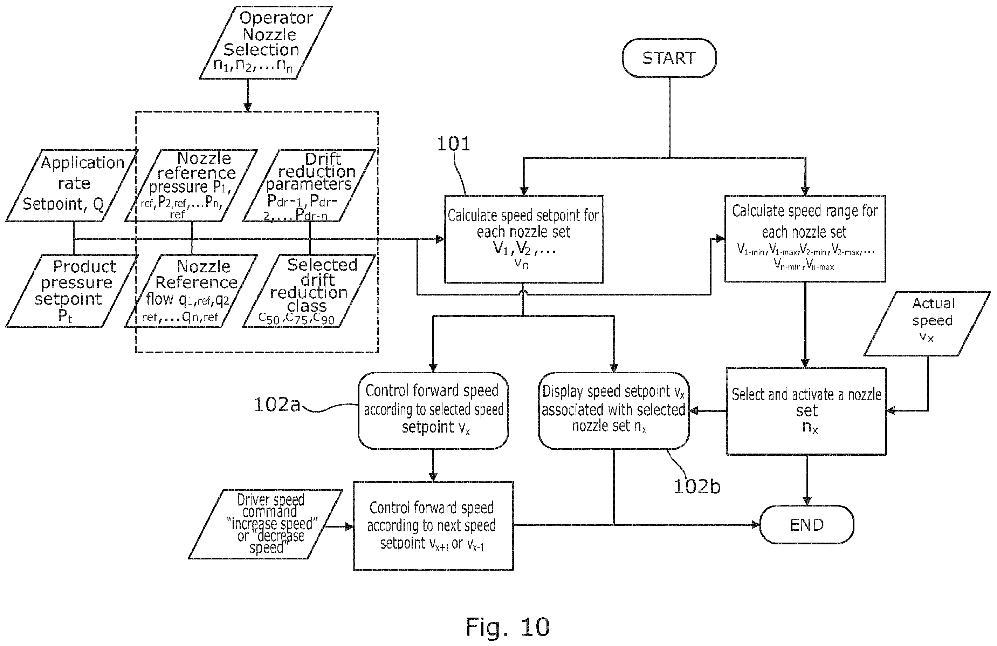

An embodiment of a method of controlling the sprayer 14 is shown in Fig. 10, wherein the method comprises receiving an application rate setpoint Q, an upper pressure limit p_{dr-x}, a nozzle reference flow q_{x-ref} and a nozzle reference pressure p_{x-ref}, calculating a speed setpoint vₓ based upon the application rate setpoint Q, the nozzle reference flow q_{x-ref}, the nozzle reference pressure p_{x-ref} and the upper pressure limit p_{dr-x}, (step 101) and, controlling at least one of a forward speed (step 102a) and a display (102b) based upon the speed setpoint vₓ.

### Automatic Nozzle Switching

As mentioned above, nozzle controller 50 is embedded in controller 34 and serves to selectively activate and deactivate the independently controllable nozzles 21,22 in an automatic manner. Automatic nozzle selection requires the following values which are input into nozzle controller 50:
- Actual speed, vₐ
- Application rate setpoint, Q
- Product pressure setpoint, pₜ
- Operating width, w
- Nozzle spacing, z
- Nozzle reference pressure of each available nozzle set, p_{x-ref}
- Nozzle reference flow of each available nozzle set, q_{x-ref}
- Pressure range (max and min) of active nozzle set, p_{dr-x}

Speed ranges for each available nozzle set are calculated by the nozzle controller 50 and used to select the most appropriate nozzle set based on the sensed forward speed v and optionally the selected drift reduction class. The listed variables and constants are received by the controller 34 through the same means as described above in relation to the flow rate control. The upper pressure limits p_{dr-x} associated with each drift reduction class are entered through the operator console 56 as also described above. The actual speed vₐ is provided by speed sensor 48 or other suitable means such as a satellite positioning system.

In contrast to known automatic nozzle switching systems, the nozzle selection and activation is based upon a measured actual forward speed which is referenced against the calculated speed ranges. The measured pressure p and flow rate q are used only for the rate controller.

The lower and speed limits of each speed range vₓ₋ₘᵢₙ, vₓ₋ₘₐₓ for each nozzle set preferably correspond to the speed setpoints vₓ calculated as described above, wherein the speed ranges for determining nozzle selection reside between the speed setpoints vₓ. Although the speed setpoints vₓ are calculated based upon reference data and upper pressure limits p_{dr} relating to the available nozzles and drift reduction classes, the nozzle selection is based on actual forward speed v rather than a sensed system pressure p.

Like the speed setpoints described above, the speed ranges are adapted in response to the input parameters including application rate setpoint Q.

### Summary

In summary, the above-described agricultural sprayer machine and variations thereof embody a number of inventive concepts which can be implemented in isolation or in various combinations, and in a spraying machine control system or a method of operating a sprayer machine. The receiving and storing of operating parameters that relate to a plurality of drift reduction classes allows, for example, the control of automatic nozzle switching or speed control taking into account the requirements for the drift reduction classes. The generation of speed setpoints based on selected nozzles and optionally on drift reduction parameters allows an operator to control a sprayer with the assurance that the speed best suits the nozzles and/or the legislative parameters of the task in hand. And the use of a measured forward speed to control nozzle selection delivers a responsive operating system.

From reading the present disclosure, other modifications will be apparent to persons skilled in the art. Such modifications may involve other features which are already known in the field of agricultural sprayers and component parts thereof and which may be used instead of or in addition to features already described herein.

## Claims

1. A method of automatically selecting a nozzle set from a plurality of nozzle sets on an agricultural spraying machine, the method comprising the steps of:
receiving an application rate setpoint, and for each nozzle set an upper pressure limit, a lower pressure limit, a nozzle reference flow and a nozzle reference pressure;
**characterized by** the steps of
calculating a speed range for each nozzle set, wherein each speed range comprises a lower speed limit and an upper speed limit;
sensing a forward speed of the spraying machine; and,
selecting one of said nozzle sets based upon the forward speed and the speed ranges.

2. A method according to Claim 1, further comprising receiving for each nozzle set an upper pressure limit for each one of a plurality of drift reduction classes, and calculating a speed range for each one of a plurality of combinations of nozzle set and drift reduction class, and said selecting one of said nozzle sets is based upon a selected one of the plurality of drift reduction classes.

3. A method according to Claim 1 or 2, further comprising adapting the speed ranges in response to a change in the application rate setpoint.

4. A method according to any preceding claim, further comprising activating the selected nozzle set.

5. A method according to any preceding claim, further comprising displaying a representation of the selected nozzle set.

6. A method according to any preceding claim, further comprising controlling a pump of a fluid delivery network based upon the selected nozzle set, the forward speed and the application rate setpoint.

7. A method according to any preceding claim, further comprising calculating a speed setpoint for each nozzle set based upon the application rate setpoint, the nozzle reference flow, the nozzle reference pressure and the upper pressure limit, and controlling the forward speed based upon the speed setpoint and a user speed command.

8. A method according to any one of Claims 1 to 6, further comprising calculating a speed setpoint for each nozzle set based upon the application rate setpoint, the nozzle reference flow, the nozzle reference pressure and the upper pressure limit, and displaying an active one of the speed setpoint associated with the selected nozzle set.

9. A method according to any preceding claim, further comprising displaying a representation of the speed ranges.

10. A controller for an agricultural spraying machine configured to execute a method according to any preceding claim.

11. An agricultural spraying machine comprising a controller according to Claim 10, and a fluid delivery network in hydraulic communication with a plurality of nozzles arranged in spaced-apart nozzle groups, wherein each nozzle set comprises one or more of said nozzles from each nozzle group.

## Patentansprüche

1. Verfahren zur automatischen Auswahl eines Düsensatzes aus mehreren Düsensätzen auf einer landwirtschaftlichen Sprühmaschine, wobei das Verfahren die folgenden Verfahrensschritte aufweist:
Empfangen einer Applikationsraten-Vorgabe sowie für jeden Düsensatz einer oberen Druckgrenze, einer unteren Druckgrenze, eines Düsen-Referenzflusses und eines Düsen-Referenzdrucks;
**gekennzeichnet durch** die Verfahrensschritte I
Berechnen eines Geschwindigkeitsbereichs für jeden Düsensatz, wobei jeder Geschwindigkeitsbereich eine untere Geschwindigkeitsgrenze und eine obere Geschwindigkeitsgrenze aufweist;
Sensieren einer Vorwärtsgeschwindigkeit der Sprühmaschine; und
Auswahl eines Düsensatzes der Düsensätze auf Basis der Vorwärtsgeschwindigkeit und der Geschwindigkeitsbereiche.

2. Verfahren nach Anspruch 1, des Weiteren mit einem Empfangen einer oberen Druckgrenze für jeden Düsensatz für jede von mehreren Driftverringerungs-Klassen und Berechnen eines Geschwindigkeitsbereichs für jede Kombination eines Düsensatzes und einer Driftverringerungs-Klasse der mehreren Kombinationen, wobei das Auswählen eines Düsensatzes der mehreren Düsensätze auf einer Auswahl einer Driftverringerungs-Klasse der mehreren Driftverringerungs-Klassen basiert.

3. Verfahren nach Anspruch 1 oder 2, des Weiteren mit einem Anpassen der Geschwindigkeitsbereiche in Abhängigkeit von einer Veränderung der Applikationsraten-Vorgabe.

4. Verfahren nach einem der vorhergehenden Ansprüche, des Weiteren mit einem Aktivieren des ausgewählten Düsensatzes.

5. Verfahren nach einem der vorhergehenden Ansprüche, des Weiteren mit einem Anzeigen einer Darstellung oder Kennzeichnung des gewählten Düsensatzes.

6. Verfahren nach einem der vorhergehenden Ansprüche, des Weiteren mit einem Steuern einer Pumpe eines Fluid-Bereitstellungsnetzwerks auf Basis des gewählten Düsensatzes, der Vorwärtsgeschwindigkeit und der Applikationsraten-Vorgabe.

7. Verfahren nach einem der vorhergehenden Ansprüche, des Weiteren mit einem Berechnen einer Geschwindigkeits-Vorgabe für jeden Düsensatz auf Basis der Applikationsraten-Vorgabe, des Düsen-Referenzflusses, des Düsen-Referenzdrucks und der oberen Druckgrenze und mit einem Steuern der Vorwärtsgeschwindigkeit auf Basis der Geschwindigkeits-Vorgabe und einer Nutzer-Geschwindigkeitsvorgabe.

8. Verfahren nach einem der Ansprüche 1 bis 6, des Weiteren mit einem Berechnen einer Geschwindigkeits-Vorgabe für jeden Düsensatz auf Basis der Applikationsraten-Vorgabe, des Düsen-Referenzflusses, des Düsen-Referenzdrucks und der oberen Druckgrenze, und mit einem Anzeigen einer aktiven Geschwindigkeits-Vorgabe, die dem ausgewählten Düsensatz zugeordnet ist.

9. Verfahren nach einem der vorhergehenden Ansprüche, des Weiteren mit einem Anzeigen einer Darstellung der Geschwindigkeitsbereiche.

10. Controller für eine landwirtschaftliche Sprühmaschine, die geeignet konfiguriert ist zur Ausführung eines Verfahrens nach einem der vorhergehenden Ansprüche.

11. Landwirtschaftliche Sprühmaschine mit einem Controller nach Anspruch 10 und einem Fluid-Bereitstellungsnetzwerk, welches hydraulisch mit mehreren der Düsen kommuniziert, die in voneinander beabstandeten Düsengruppen angeordnet sind, wobei jeder Düsensatz mindestens eine der Düsen von jeder Düsengruppe aufweist.

## Revendications

1. Procédé de sélection automatique d'un ensemble de buses parmi une pluralité d'ensembles de buses sur une machine de pulvérisation agricole, le procédé comprenant les étapes de :
la réception d'un point de consigne de débit d'application et, pour chaque ensemble de buses, une limite de pression supérieure, une limite de pression inférieure, un débit de référence de buse et une pression de référence de buse ;
**caractérisé par** les étapes de
le calcul d'une plage de vitesse pour chaque ensemble de buses, dans lequel chaque plage de vitesse comprend une limite de vitesse inférieure et une limite de vitesse supérieure ;
la détection d'une vitesse d'avancement de la machine de pulvérisation ; et,
la sélection de l'un desdits ensembles de buses sur la base de la vitesse d'avancement et des plages de vitesse.

2. Procédé selon la revendication 1, comprenant en outre la réception, pour chaque ensemble de buses, d'une limite de pression supérieure pour chacune d'une pluralité de classes de réduction de dérive, et le calcul d'une plage de vitesse pour chacune d'une pluralité de combinaisons d'ensemble de buses et de classe de réduction de dérive, et ladite sélection de l'un desdits ensembles de buses est basée sur l'une sélectionnée parmi la pluralité de classes de réduction de dérive.

3. Procédé selon la revendication 1 ou 2, comprenant en outre l'adaptation des plages de vitesse en réponse à un changement du point de consigne de débit d'application.

4. Procédé selon une quelconque revendication précédente, comprenant en outre l'activation de l'ensemble de buses sélectionné.

5. Procédé selon une quelconque revendication précédente, comprenant en outre l'affichage d'une représentation de l'ensemble de buses sélectionné.

6. Procédé selon une quelconque revendication précédente, comprenant en outre la commande d'une pompe d'un réseau de distribution de fluide sur la base de l'ensemble de buses sélectionné, de la vitesse d'avancement et du point de consigne de débit d'application.

7. Procédé selon une quelconque revendication précédente, comprenant en outre le calcul d'un point de consigne de vitesse pour chaque ensemble de buses sur la base du point de consigne de débit d'application, du débit de référence de buse, de la pression de référence de buse et de la limite supérieure de pression, et la commande de la vitesse d'avancement sur la base du point de consigne de vitesse et d'une commande de vitesse d'utilisateur.

8. Procédé selon l'une quelconque des revendications 1 à 6, comprenant en outre le calcul d'un point de consigne de vitesse pour chaque ensemble de buses sur la base du point de consigne de débit d'application, du débit de référence de buse, de la pression de référence de buse et de la limite de pression supérieure, et l'affichage d'un point de consigne de vitesse active associé à l'ensemble de buses sélectionné.

9. Procédé selon une quelconque revendication précédente, comprenant en outre l'affichage d'une représentation des plages de vitesses.

10. Dispositif de commande pour une machine de pulvérisation agricole configurée pour exécuter un procédé selon une quelconque revendication précédente.

11. Machine de pulvérisation agricole comprenant un dispositif de commande selon la revendication 10, et un réseau de distribution de fluide en communication hydraulique avec une pluralité de buses agencées en groupes de buses espacés, dans lequel chaque ensemble de buses comprend une ou plusieurs desdites buses de chaque groupe de buses.
